Europäisches Patentamt

European Patent Office

Office européen des brevets

(19)

(11) **EP 0 738 032 B1**

(12) **EUROPÄISCHE PATENTSCHRIFT**

(45) Veröffentlichungstag und Bekanntmachung des Hinweises auf die Patenterteilung:
**08.09.1999 Patentblatt 1999/36**

(51) Int Cl.⁶: **H02H 7/085**

(21) Anmeldenummer: **95110206.0**

(22) Anmeldetag: **30.06.1995**

(54) **Verfahren zur Überwachung des Bewegungsvorgangs von motorisch verstellbaren Gegenständen**

Method for monitoring of movement of motorised adjustable objects

Procédé de surveillance des mouvements d'objets à réglage motorisé

(84) Benannte Vertragsstaaten:
**DE ES FR GB IT SE**

(30) Priorität: **15.04.1995 DE 19514257**

(43) Veröffentlichungstag der Anmeldung:
**16.10.1996 Patentblatt 1996/42**

(73) Patentinhaber: **Leopold Kostal GmbH & Co. KG
58507 Lüdenscheid (DE)**

(72) Erfinder: **Brieden, Michael
D-58642 Iserlohn (DE)**

(56) Entgegenhaltungen:
**EP-A- 0 627 676          WO-A-95/07568
GB-A- 2 267 161**

**Beschreibung**

Die Erfindung betrifft ein Verfahren zur Überwachung des Bewegungsvorgangs von motorisch verstellbaren Gegenständen, insbesondere von in Kraftfahrzeugen vorhandenen Fenstern und Schiebedächern, wobei ein an einer Versorgungsspannung angeschlossener Motor über Schalter und/oder über charakteristische Größen des Verstellsystems erfassende Sensoren durch eine mit Speicher- und Vergleichsgliedern versehende Datenverarbeitungseinrichtung abgeschaltet wird, wenn beim Verstellvorgang in einem Sicherheitsbereich des Verstellweges ein von der Motordrehzahl oder der Geschwindigkeit des Gegenstandes abhängiger Wert einen in Abhängigkeit dieser Werte aktualisierten Grenzwert überschreitet.

Ein derartiges Verfahren ist durch die DE 30 34 118 C2 und die DE 31 36 746 C2 für beispielsweise Fensterhebesysteme bekannt geworden, wobei dem Fh-Motor Hall-Sensoren zugeordnet sind, die pro Motorperiode einen Impuls liefern. Die Impulse sind zur Bestimmung des zurückgelegten Weges bzw. der Position des verstellbaren - im folgenden durchgängig als Fenster bezeichneten - Gegenstandes und für die Erfassung der der jeweils aktuellen Motorperiode zugehörigen Zeit vorgesehen, wobei die Überwachung vorzugsweise in einem mittleren Bereich des Schließweges des Fensters aktiv ist. Der aktuelle Perioden-Wert wird dabei mit einem daraus abgeleiteten, das heißt laufend aktualisierten Grenzwert verglichen. Wenn der aktuelle Perioden-Wert größer als der Grenzwert ist, erfolgt eine Abschaltung bzw. Reversierung des Fh-Motors und zwar weil dadurch eine große Wahrscheinlichkeit gegeben ist, daß das Fenster durch ein Hindernis in seiner Bewegung beeinflußt bzw. blockiert ist.

Diese Art der Überwachung ist im großen und ganzen zufriedenstellend. Allerdings setzt die Überwachung erst nach einer vollen Motorperiode ein, weil erst dann ein Perioden-Wert verfügbar ist. Durch kurzzeitige Betätigungen der Bedienelemente, das heißt durch ein zeitlich unterhalb der für eine Motorperiode benötigten Zeit liegendes Einschalten des Fh-Motors kann das Fenster unbeeinflußt gegen ein im Verstellweg befindliches Objekt bewegt werden und damit unter Umständen eine Gefahr für dasselbe hervorrufen. Da in der Anlaufphase die Motorperiode sich recht stark verändert, liegt erst nach etwa drei Motorperioden ein eingeschwungener Zustand, das heißt ein gleichmäßiger Motorlauf vor, so daß auch erst dann eine zufriedenstellende Sicherheit gegen eine übermäßige Kraftentfaltung gewährleistet ist.

Darüber hinaus ist durch die EP 0 627 676 A1 ein Verfahren zur Überwachung und Steuerung des Bewegungsvorgangs von motorisch verstellbaren Gegenständen bekanntgeworden, bei dem in die von einem Mikrocomputer vorgenommene Berechnung der Abschaltperiodendauer u.a. der bzw. die Wert(e) der vorhergehend gemessenen Periodendauer(n) eingehen.

Diese vorhergehend gemessene(n) Periodendauer(n) gehör(t/en) zu einem gerade ablaufenden motorischen Bewegungsvorgang und lieg(t/en) demgemäß direkt vor der nachfolgend gemessenen Periodendauer.

Somit bezieht sich das bekannte Verfahren nur auf einen bereits stattfindenden Verstellprozess eines Aggregates und nicht auf den Beginn eines solchen.

Der vorliegenden Erfindung liegt die Aufgabe zugrunde, ein Überwachungsverfahren zu realisieren, das auch in der Anlaufphase des Motors wirksam ist.

Diese Aufgabe wird nach der Erfindung dadurch gelöst, daß in der Anlaufphase des Motors ein aus zumindest einem gegen Ende der vorangegangenen sicherheitsrelevanten Verstellung des Gegenstandes aufgetretenen, von dem zur Erfassung der Drehzahl bzw. Geschwindigkeit vorgesehenen Sensor hervorgerufenen Perioden-Wert vorausberechneter anfänglicher Perioden-Grenzwert mit dem aktuellen Perioden-Wert verglichen wird.

Die Erfindung unterscheidet sich in insofern vom Stand der Technik, als ein während der vorhergehenden Betätigung des Motors gespeicherter Bezugswert für die Bestimmung eines anfänglichen Perioden-Grenzwertes herangezogen wird, so daß bereits in der ersten Motorperiode der vom Sensor hervorgerufene aktuelle Perioden-Wert mit dem anfänglichen Perioden-Grenzwert verglichen werden kann.

Zur Überwachung in der Anlaufphase ist dabei vorgesehen, daß der anfängliche Perioden-Grenzwert (PGW*) vorzugsweise auf der Basis des letzten Perioden-Wertes (PWv$_n$) der vorangegangenen Verstellung nach der Formel

$$PGW^* = 2 \times PWv_n \times (0,5 + e^{-t/\tau})$$

mit einer zwischen dem Beginn der Motoransteuerung und dem Auftreten des ersten vom Sensor gelieferten aktuellen Perioden-Wertes (PWa) liegenden Zeit t und einer in der Größenordnung von etwa 20 ms befindlichen Zeitkonstanten τ festgelegt wird. Dieser anfängliche Perioden-Grenzwert wird vorzugsweise noch mit einem in der Größenordnung von ca. 10 % liegenden Sicherheitszuschlag gewichtet.

Eine einfache Steuerung erzielt man dadurch, daß in der Anlaufphase des Motors bis zur dritten Motorperiode das bekannte Anlaufverhalten des Fh-Motors in der Form berücksichtigt wird, daß der der gerade vollendeten Motorperiode zugehörige Perioden-Wert als momentaner Perioden-Grenzwert verwendet und mit dem gerade aktuellen Perioden-Wert verglichen wird. Eine vollständige Überwachung der Anlaufphase des Fh-Motors - auch bei sehr kurzzeitiger Betätigung der Bedienelemente - wird dadurch sichergestellt, daß in der Anlaufphase des Motors der Ausschaltzeitpunkt desselben mit dem Ende einer Motorperiode synchronisiert wird. Unter kurzzeitiger Betätigung der Bedienelemente ist zu verstehen, daß die Betätigung bereits zu Beginn der Anlaufphase des Motors d.h. während der ersten Motorperiode wieder beendet wird.

Ein Ausführungsbeispiel der Erfindung wird unter Bezugnahme auf zeichnerische Darstellungen näher erläutert. Dabei zeigt

Fig. 1 ein Blockschaltbild für eine Überwachung eines motorischen Verstellsystems

Fig. 2 und 3 Signalverläufe der Bedienelemente (a) sowie der Motoransteuerung (b) und der zugehörigen Perioden-Werte (c).

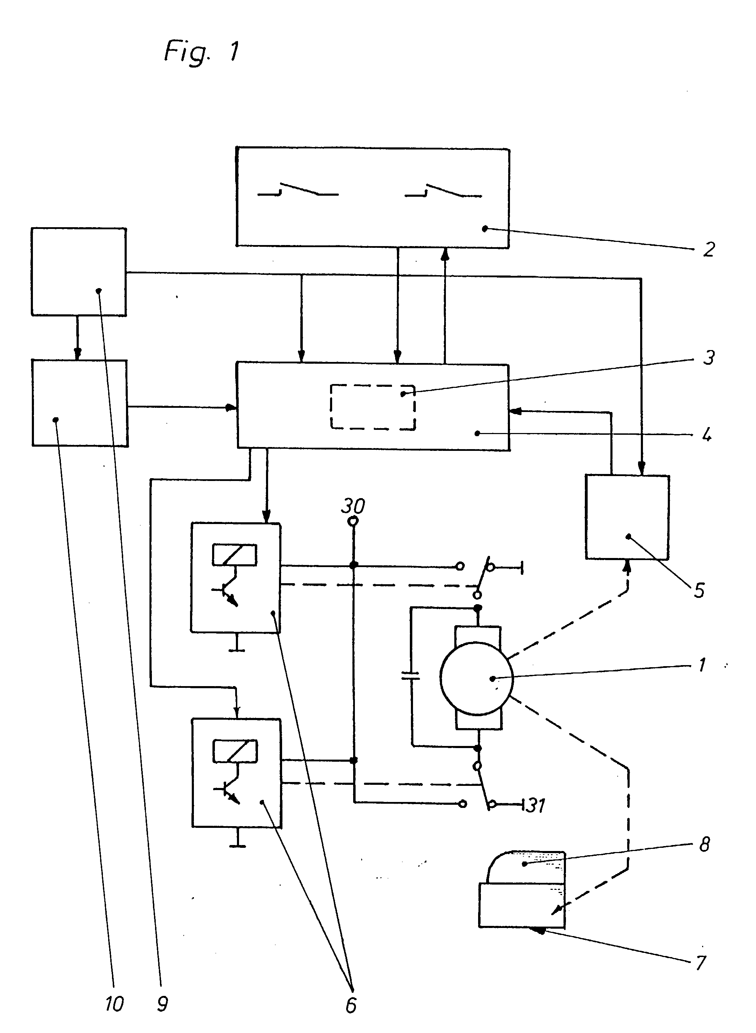

Das Blockschaltbild nach Fig. 1 umfaßt eine einem in einem Fensterhebesystem vorhandenen Fh-Motor 1 zugeordnete Schaltungsanordnung, die im wesentlichen eine von Bedienelementen 2 beeinflußte, insbesondere mit einem Microcomputer 3 versehene elektronische Auswert- und Steuereinheit 4 aufweist, die die gesamte Überwachung vornimmt. Über die zur Auslösung des Verstellvorgangs vorgesehenen, zum Beispiel als Taster ausgebildeten, dem Fensterhebesystem zugeordneten Bedienelemente werden die Befehle "Fenster auf" und "Fenster zu" initiiert, womit die Ansteuerung des Fh-Motors in entsprechender Richtung eingeleitet, und damit das in einer Fahrzeugtür 7 vorhandene Fenster 8 entsprechend verstellt wird. Der Microcomputer 3 steuert entsprechend der Betätigung der Bedienelemente 2 die zugehörigen, zum Beispiel als Relais ausgebildeten Leistungsschaltelemente 6 an und zwar im Sinne der Verstellfunktionen "auf" bzw. "zu". Mit entsprechender Polung wird der Fh-Motor an die über die Anschlüsse 30, 31 zugeführte Bordspannung gelegt. Ein vorzugsweise als Hall-Sensor ausgebildeter Sensor 5 gibt während jeder Motorperiode ein Signal ab, das von dem Microcomputer 3 ausgewertet wird. In der Schaltungsanordnung ist außerdem in üblicher Weise eine Spannungsstabilisierungsstufe 9 und eine Taktstufe 10 angeordnet.

Im eingeschwungenen Betrieb des Fh-Motors 1 wird jede Motorperiode durch einen Perioden-Wert PW festgehalten und daraus ein Perioden-Grenzwert PGW berechnet, der mit dem nachfolgenden Perioden-Wert verglichen wird. Das Überschreiten des aktuellen Perioden-Grenzwertes durch den nachfolgenden Perioden-Wert wird als auftretendes Hindernis erkannt, worauf eine Abschaltung und gegebenenfalls eine Reversierung des Fh-Motors erfolgt.

Bei der über die Zeit TBe andauernden, nach der Unterbrechung TBa = TMa (Bedienelemente in Ausposition und damit Fh-Motor ausgeschaltet) einsetzenden Betätigung des für die Funktion "Fenster zu" vorgesehenen Bedienelementes 2 läuft der Fh-Motor 1 an; jedoch steht dabei zunächst noch kein Perioden-Wert PW zur Verfügung, aus dem sich dann ein Perioden-Grenzwert PGW ableiten könnte.

In der Anlaufphase des über die Zeit TMe angesteuerten, die aktuelle Verstellung Va ausführenden Fh-Motors wird daher ein vorläufiger Perioden-Grenzwert PGW∗ für die erste Motorperiode mit Beginn des ersten vom Hall-Sensor 5 gelieferten Signalimpulses aus zumindest einem gegen Ende der vorangegangenen sicherheitsrelevanten Verstellung Vv des Fensters aufgetretenen, vom Hall-Sensor 5 gelieferten Perioden-Wert vorausberechnet, womit der Einklemmschutz also bereits innerhalb der ersten Motorperiode wirksam wird.

Da das Anlaufverhalten des Fh-Motors 1 negativ exponentiell ist, gilt näherungsweise für den anfänglichen Perioden-Grenzwert

$$PGW^* = 2 \times PWv_n \times (0{,}5 + e^{-t/\tau})$$

wobei t die zwischen dem Beginn der Motoransteuerung und dem Auftreten des ersten vom Hall-Sensor 5 gelieferten aktuellen Perioden-Wertes liegende Zeit und $\tau$ eine in der Größenordnung von etwa 20 ms liegende Zeitkonstante des Fh-Motors ist. Der nach der oben erwähnten Gleichung berechnete Perioden-Grenzwert wird gegebenenfalls mit einem in der Größenordnung von etwa 10 % liegenden Sicherheitszuschlag gewichtet und ergibt somit den gegebenenfalls korrigierten anfänglichen Perioden-Grenzwert PGW*.

Nach der ersten Motorperiode wird der Perioden-Grenzwert unter Berücksichtigung der Anlaufcharakteristik des Fh-Motors bis zum eingeschwungenen Zustand berechnet.

Für die zweite und dritte Motorperiode gelten dabei näherungsweise folgende Beziehungen

$$PWa_2 = 0{,}83 \times PWa_1$$

$$PWa_3 = 0{,}92 \times PWa_2 \sim 0{,}75 \, PWa_1.$$

In der Konsequenz bedeutet dies, daß die erste Motorperiode größer als die zweite und die zweite größer als die dritte Motorperiode ist. Für die Überwachung und damit für die Abschaltung des Fh-Motors 1 wird somit in der Anlaufphase desselben der erste ermittelte Perioden-Wert $PWa_1$ als Perioden-Grenzwert für die zweite Motorperiode und der zweite Perioden-Wert $PWa_2$ als Perioden-Grenzwert für die dritte Motorperiode verwendet. Diese Perioden-Grenzwerte können in Abhängigkeit der jeweils herrschenden Verhältnisse mit einem in der Größenordnung von 1 - 1,25 liegenden Faktor korrigiert werden. Nach der dritten Motorperiode erfolgt auf jeden Fall die Berechnung des Perioden-Grenzwertes PGW mit den aus der jeweils gerade vollendeten Motorperiode hervorgehenden Perioden-Werten PW.

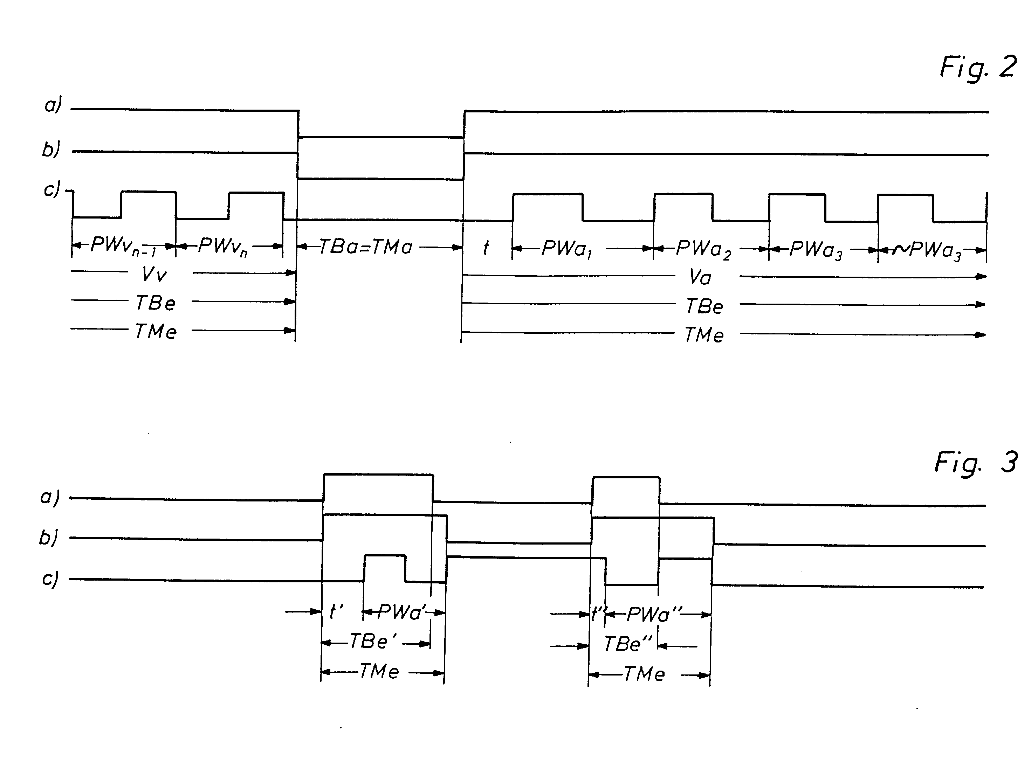

Verstellungen des Fensters durch kurzzeitige Betätigungen der Bedienelemente 2, das heißt solche, die kürzer als eine Motorperiode sind, können ebenfalls überwacht werden (siehe Fig. 3). Dabei wird bei Betätigungszeiten TBe', TBe'' der Bedienelemente 2, die kürzer als eine Motorperiode sind, auf jeden Fall eine volle Motorperiode realisiert und zwar indem die mit Ablauf der Zeit TMe einsetzende Beendigung der Motoransteuerung mit dem Ende des vom Hall-Sensor 5 gelieferten, nach einer von der jeweiligen Ausgangslage des Hall-Sensors abhängigen Zeit t' bzw. t'' einsetzenden Periodenwertes PWa' bzw. PWa'' synchronisiert wird. Liegt also der vorausberechnete Perioden-Grenzwert PGW* unterhalb der ermittelten Perioden-Werte PWa' bzw. PWa'', so erfolgt eine Sicherheitsabschaltung des Fh-Motors.

**Patentansprüche**

1. Verfahren zur Überwachung des Bewegungsvorgangs von motorisch verstellbaren Gegenständen, insbesondere des Schließvorgangs von in Kraftfahrzeugen vorhandenen Fenstern bzw. Schiebedächern, wobei ein an einer Versorgungsspannung angeschlossener Motor über Schaltmittel und/oder über charakteristische Größen des Verstellsystems erfassende Sensoren durch eine mit Speicher- und Vergleichsgliedern versehene Datenverarbeitungseinrichtung abgeschaltet wird, wenn beim Verstellvorgang in einem Sicherheitsbereich des Verstellweges ein von der Motordrehzahl oder der Geschwindigkeit des Gegenstandes abhängiger Wert einen in Anhängigkeit der erfassten Werte aktualisierten Grenzwert überschreitet, **dadurch gekennzeichnet**, daß in der Anlaufphase des Motors ein aus zumindest einem gegen Ende der vorangegangenen sicherheitsrelevanten Verstellung des Gegenstandes aufgetretenen, von dem zur Erfassung der Drehzahl bzw. Geschwindigkeit vorgesehenen Sensor hervorgerufenen, gespeicherten Perioden-Wert (PWv) vorausberechneter anfänglicher Perioden-Grenzwert (PGW*) mit dem aktuellen Perioden-Wert (PWa) verglichen wird.

2. Verfahren nach Anspruch 1 dadurch gekennzeichnet, daß der anfängliche Perioden-Grenzwert (PGW*) auf der Basis des letzten Perioden-Wertes $(PWv_n)$ der vorangegangenen Verstellung nach der Formel

$$PGW^* = 2 \times PWv_n \times (0,5 + e^{-t/\tau})$$

mit einer zwischen dem Beginn der Motoransteuerung und dem Auftreten des ersten vom Sensor gelieferten aktuellen Perioden-Wertes (PWa) liegenden Zeit t und einer in der Größenordnung von etwa 20 ms befindlichen Zeitkonstanten $\tau$ festgelegt wird.

3. Verfahren nach einem der Ansprüche 1 oder 2, dadurch gekennzeichnet, daß der anfängliche Perioden-Grenzwert (PGW*) mit einem in der Größenordnung von ca. 10% liegenden Sicherheitszuschlag gewichtet wird.

4. Verfahren nach einem der Ansprüche 1 bis 3, dadurch gekennzeichet, daß in der Anlaufphase des Motors der Ausschaltzeitpunkt desselben mit dem Ende einer Motorperiode synchronisiert wird.

5. Verfahren nach einem der Ansprüche 1 bis 4, dadurch gekennzeichnet, daß in der Anlaufphase des Motors bis zur dritten Motorperiode das bekannte Anlaufverhalten des Motors in der Form berücksichtigt wird, daß der der gerade vollendeten Motorperiode zugehörige Perioden-Wert ($PWa_1$ bzw. $PWa_2$) als momentaner Perioden-Grenzwert verwendet und mit dem gerade aktuellen Perioden-Wert ($PWa_2$ bzw. $PWa_3$) verglichen wird.

6. Verfahren nach Anspruch 5, dadurch gekennzeichnet, daß das Anlaufverhalten des Motors durch einen Faktor pro Motorperiode berücksichtigt wird, mit dem der der gerade vollendeten Motorperiode zugehörige Perioden-Wert ($PWa_1$ bzw. $PWa_2$) multipliziert wird.

7. Verfahren nach Anspruch 6, dadurch gekennzeichnet, daß der Faktor in einer Größenordnung von 1 - 1,25 liegt.

8. Verfahren nach einem der Ansprüche 1 bis 7, dadurch gekennzeichnet, daß das die Drehzahl bzw. Geschwindigkeit repräsentierende Signal von einem digitale Impulse erzeugenden Hall-Sensor geliefert wird.

**Claims**

1. Technique for monitoring the motional process of objects which are actuated by power motor, in particular the closing process of windows or sliding roofs in vehicles, whereby a motor connected to a power supply voltage is switched off by way of switching equipment and/or by way of sensors which record the characteristic quantities of the actuating system on the basis of a data processing device equipped with storage and comparing elements, if during the adjustment operation a value within the safety zone of the adjustment path, which is dependent on the speed of the motor or on the speed of the object, exceeds a limit value which is updated appendant to the recorded values, **characterized by the fact that** during the starting phase of the motor a predicted initial period limiting value (PGW*) comprising at least one stored period value (PWv) occurring towards the end of the preceding safety-relevant adjustment of the object and caused by the sensor provided for registering the revolutions or speed is compared with the current period value (PWa).

2. Technique in accordance with Claim 1, characterized by the fact that the initial period limit value (PWG*) is determined on the basis of the last period value (PWv$_n$) of the preceding adjustment according to the formula

$$PGW^* = 2 \times PWv_n \times (0.5 + e^{-t/\tau})$$

with a time t lying between the beginning of the motor activation and the occurrence of the first updated period value (PWa) provided by the sensor, and with a time constant $\tau$ in the order of magnitude of about 20 ms.

3. Technique in accordance with either of Claims 1 or 2, characterized by the fact that the initial period limit value (PGW*) is weighted with an increased safety factor in the order of magnitude of approx. 10%.

4. Technique in accordance with any of Claims 1 to 3, characterized by the fact that, during the starting phase of the motor, the switch-off moment of the same is synchronised with the end of a motor period.

5. Technique in accordance with any of Claims 1 to 4, characterized by the fact that, during the starting phase of the motor up to the third motor period, the known starting performance of the motor is taken into consideration in that the period value (Pwa$_1$ or PWa$_2$ respectively) pertaining to the motor period just completed is used as the momentary period limit value and is compared with the then current period value (PWa$_2$ or PWa$_3$) respectively.

6. Technique in accordance with Claim 5, characterized by the fact that the starting performance of the motor is taken into account by way of a factor per motor period by which the period value (Pwa$_1$ or PWa$_2$ respectively) pertaining to the motor period just completed is multiplied.

7. Technique in accordance with Claim 6, characterized by the fact that the factor is in an order of magnitude between 1 and 1.25.

8. Technique in accordance with any of Claims 1 to 7, characterized by the fact that the signal representing the revolutions or speed is provided by a Hall-effect sensor which generates pulsed digital quantities.

## Revendications

1. Procédé de contrôle du déplacement motorisé d'objets, notamment de glaces et de toits ouvrants de véhicules automobiles, un moteur, branché sur une source de courant d'alimentation étant déconnecté par une installation de traitement de données équipée d'organes de mémorisation et de comparaison, par l'intermédiaire de commutateurs et/ou de capteurs de valeurs caractéristiques du système de réglage quand, lors du déplacement, dans une marge de sécurité du trajet, une valeur dépendant de la vitesse de rotation du moteur ou de la vitesse de l'objet a dépassé une valeur limite actualisée en fonction de ces valeurs,
caractérisé en ce
qu'une valeur de référence, enregistrée pendant l'actionnement précédant du moteur, est prise en compte pour définir une valeur limite de période initiale de sorte que la comparaison de la valeur de période actuelle saisie par le capteur et de la valeur limite de période initiale puisse être effectuée dès la première période de moteur.

2. Procédé selon la revendication 1,
caractérisé en ce que
la valeur limite initiale (PGW*) est déterminée, de préférence, sur la base de la dernière valeur de période (PWv$_n$) du réglage précédant selon la formule

$$PGW^* = 2 \times PWvn \times (0,5 + e^{-t/\tau})$$

avec un temps t écoulé entre le début de l'excitation du moteur et l'apparition de la première valeur de période actuelle (PWa) fournie par le capteur et une constante de temps $\tau$ située dans un ordre de grandeur d'environ 20 ms.

3. Procédé selon la revendication 1 ou 2,
caractérisé en ce que
la valeur limite initiale (PWG*) est préférentiellement encore pondérée par un coefficient de majoration de sécurité d'un ordre de grandeur d'environ 10 %.

4. Procédé selon l'une des revendications 1 à 3,
caractérisé en ce que,
pendant la phase de démarrage du moteur, le moment de déconnexion de celui-ci et la fin d'une période moteur sont synchrones.

5. Procédé selon l'une des revendications 1 à 4,
caractérisé en ce que,
pendant la phase de démarrage du moteur et jusqu'à la troisième période de moteur, l'allure de démarrage connue du moteur est prise en considération de sorte que la valeur de période (PWa$_1$ resp.

PWa$_2$) afférente à la période de moteur, qui vient d'être accomplie, est utilisée en tant que valeur limite de période momentanée et comparée avec la valeur de période directement actuelle (PWa$_2$ resp. PWa$_3$).

6. Procédé selon la revendication 5,
caractérisé en ce que
le comportement du moteur au démarrage est pris en considération par un facteur pour chaque période du moteur, facteur par lequel la valeur de période afférente à la période de moteur venant d'être accomplie (Pwa$_1$ resp. PWa2) est multipliée.

7. Procédé selon la revendication 6,
caractérisé en ce que
le facteur est situé dans un ordre de grandeur de 1 à 1,25.

8. Procédé selon l'une des revendications 1 à 3,
caractérisé en ce que,
le signal, qui représente le nombre de tours resp. la vitesse, est délivré par un capteur Hall générant une impulsion digitale.

Fig. 1

Fig. 2

Fig. 3